# EUROPEAN PATENT APPLICATION

(11) **EP 4 725 971 A1**
(43) Date of publication of application: **15.04.2026**
(21) Application number: 24818340.2
(22) Date of filing: 27.03.2024
(51) Int. Cl.: C08F 290/06, C08G 59/17, C08F 283/10

(54) **HEAT-RESISTANT VINYL ESTER RESIN AND PREPARATION METHOD THEREFOR**

(30) Priority: 09.06.2023 CN 202310684640
(71) Applicant: Sino Polymer Co., Ltd., Shanghai 201400 (CN)
(72) Inventor: LV, Xiaoping, Shanghai 201400 (CN); CHEN, Jianhui, Shanghai 201400 (CN); LIU, Hua, Shanghai 201400 (CN); YANG, Meng, Shanghai 201400 (CN); SHU, Da, Shanghai 201400 (CN); LIU, Shiqiang, Shanghai 201400 (CN); WU, Bing, Shanghai 201400 (CN)
(74) Representative: Cabinet Chaillot
(86) International application number: PCT/CN2024/083984
(87) International publication number: WO 2024/250803

(57) **Abstract**

The present invention relates to the field of organic polymer compounds, and in particular, to heat-resistant vinyl ester resin and a preparation method therefor. **In** the present invention, phenolic epoxy resin and low-viscosity multifunctional epoxy resin are specifically selected to be compounded, react with an unsaturated acid, and then be cross-linked with a specific crosslinking monomer. High-temperature resistance of the obtained vinyl ester resin is improved and is far higher than that in the prior art, and the vinyl ester resin can resist a temperature of 200°C and even a temperature of 230°C or above, still has good mechanical properties and corrosion resistance, has moderate viscosity, can adapt to various molding processes and use scenarios, and can meet the use requirements in various fields, thereby further expanding the use range of the heat-resistant vinyl ester resin.

## Description

### FIELD OF TECHNOLOGY

The present invention belongs to the field of organic polymer compounds, particularly relates to the field under IPC classification number C08L51/00, and more specifically, relates to a heat-resistant vinyl ester resin and a preparation method therefor.

### BACKGROUND

Vinyl ester resin is obtained by the addition reaction between an epoxy resin and an unsaturated monocarboxylic acid containing double bonds. The basic chain segments of epoxy resin are retained to possess excellent corrosion resistance and mechanical properties; moreover, unsaturated double bonds are introduced to exhibit good machinability. Therefore, the vinyl ester resin has been widely used in the fields such as chemical engineering, metallurgy, and construction, and often serves as an anti-corrosion coating or for the preparation of anti-corrosion products. Among them, due to outstanding high temperature resistance, solution resistance, acid and alkali resistance, and oxidation resistance, the phenolic-epoxy vinyl ester resin having a high crosslinking density has been favored by the market, and is particularly suitable for the application scenarios such as desulphurization equipment and high-temperature chimneys.

However, the heat distortion temperature of bisphenol-A epoxy vinyl ester resin currently available on the market can only reach 110°C around, which can no longer meet the use requirements in certain fields. For example, the long-term operating temperature of vinylester glass flake mortar reaches 100-180°C, and its accident temperature is up to above 200°C. When the operating temperature exceeds 180°C, the strength of the mortar decreases, leading to stripping and falling off accidents. To meet the use requirements of high-temperature scenarios, it is necessary to develop a vinyl ester resin capable of resisting higher temperature. Prior art CN 109867912B discloses a thermosetting resin composition mainly consisting of an epoxy resin, an unsaturated-polyester active ester resin, and a vinyl benzyl-modified phenolic resin. The thermosetting resin composition has the advantages of good dielectric properties, high peel strength, and good high-temperature resistance. However, its glass-transition temperature can only reach up to 170°C, which still fails to satisfy the requirements of certain specific application scenarios.

### SUMMARY

Directed to the deficiencies in the prior art, the objective of the present invention is to provide a heat-resistant vinyl ester resin having a high crosslinking density, good mechanical properties, good corrosion resistance, moderate viscosity, excellent machinability, and capable of resisting a high temperature of greater than 200°C.

The objective of the present invention is to further provide a method for preparing the aforesaid heat-resistant vinyl ester resin. The method is low-cost, simple in process, and suitable for industrial-scale production.

To achieve the above objectives, the present invention adopts the following technical solutions:
Provided is a heat-resistant vinyl ester resin, including a vinyl ester resin prepolymer, a crosslinking monomer, a coupling agent, and a polymerization inhibitor A as raw materials.

Preferably, raw materials of the vinyl ester resin prepolymer include: a phenolic epoxy resin, a multifunctional epoxy resin, an unsaturated monocarboxylic acid, a catalyst, and a polymerization inhibitor B.

Preferably, the raw materials include, in parts by weight, 45-55 parts of the vinyl ester resin prepolymer, 45-60 parts of the crosslinking monomer, 0.3-1 part of the coupling agent, and 0.02-0.05 parts of the polymerization inhibitor A.

Preferably, the mass ratio of the vinyl ester resin prepolymer to the crosslinking monomer is 0.8-1.2:1.

More preferably, the raw materials include, in parts by weight, 49-51 parts of the vinyl ester resin prepolymer, 48-60 parts of the crosslinking monomer, 0.5-0.7 parts of the coupling agent, and 0.03-0.04 parts of the polymerization inhibitor A.

Preferably, the vinyl ester resin prepolymer includes, in parts by weight, 25-40 parts of the phenolic epoxy resin, 4-8 parts of the multifunctional epoxy resin, 0.015-0.03 parts of the polymerization inhibitor B, 15-20 parts of the unsaturated monocarboxylic acid, and 0.01-0.02 parts of the catalyst.

Preferably, the mass ratio of the phenolic epoxy resin to the multifunctional epoxy resin is 5-7:1.

More preferably, the vinyl ester resin prepolymer includes, in parts by weight, 27-30 parts of the phenolic epoxy resin, 4-6 parts of the multifunctional epoxy resin, 0.02-0.03 parts of the polymerization inhibitor B, 16-17 parts of the unsaturated monocarboxylic acid, and 0.5-0.6 parts of the catalyst.

Preferably, the epoxy value of the phenolic epoxy resin is 0.45-0.6 eq/100g.

Preferably, the phenolic epoxy resin is selected from one or more of a multifunctional o-cresol formaldehyde epoxy resin, a bisphenol-A phenolic epoxy resin, and a phenol-phenolic epoxy resin.

Preferably, the multifunctional epoxy resin is selected from one or more of AG-70, AG-80, and AFG-90.

In the present invention, the phenolic epoxy resin having an epoxy value of 0.45-0.6 eq/100g is selected as the raw material. After curing, it exhibits high crosslinking density and excellent heat resistance and chemical resistance. However, its viscosity is relatively high, resulting in poor machinability. After crosslinking with a vinyl monomer, its mechanical properties deteriorate significantly and toughness decreases, thus limiting its application. Moreover, when phenolic epoxy resin is used alone to be reacted with an unsaturated carboxylic acid and then crosslinked with a vinyl monomer, the glass-transition temperature of the cured product may only reach about 170°C, which still may not meet the requirements for higher heat resistance. Through research, the inventors have found that after an appropriate amount of the multifunctional epoxy resin is added to be reacted together with the phenolic epoxy resin, the resulting product achieves unexpectedly improved high-temperature resistance and a glass-transition temperature capable of being up to 200°C or even above 230°C. Moreover, the product essentially maintains good mechanical properties and corrosion resistance. It is speculated that this may be because the multifunctional epoxy resin has a viscosity lower than that of the phenolic epoxy resin and contains more epoxy groups. When the multifunctional epoxy resin is blended into the phenolic epoxy resin, it reduces the content of rigid structures to some extent while increasing the number of crosslinking reaction points, thereby improving the mechanical properties of the crosslinked product. A specific amount of addition can control the product viscosity within a moderate range to achieve good wettability to various materials, thereby improving synthesis operability for convenient use. On the other hand, the multifunctional epoxy resin increases the density of active functional groups in the composite resin, which further increases the crosslinking density, significantly enhances the heat resistance of the crosslinked product. In the meantime, the dense crosslinked structure also improves corrosion resistance.

Preferably, the polymerization inhibitor A and the polymerization inhibitor B are independently selected from one or more of tert-butylhydroquinone, p-hydroxyanisole, tert-butylpyrocatechol, p-benzoquinone, hydroquinone, and methylhydroquinone.

Preferably, the polymerization inhibitor B is p-hydroxyanisole.

Preferably, the polymerization inhibitor A is a combination of two or more of tert-butylhydroquinone, p-hydroxyanisole, tert-butylpyrocatechol, p-benzoquinone, hydroquinone, and methylhydroquinone.

Preferably, the polymerization inhibitor A is a combination of tert-butylpyrocatechol and hydroquinone.

More preferably, the mass ratio of the tert-butylpyrocatechol to the hydroquinone is 5.5-6:1.

Preferably, the unsaturated monocarboxylic acid is selected from acrylic acid, α-butenoic acid, methacrylic acid, crotonic acid, and cinnamic acid.

Preferably, the catalyst includes one or more of trimethylamine, pyridine, methyl sulfide, diethylene glycol dimethyl ether, triphenylphosphine, benzyltrimethylammonium chloride, benzyltriethylammonium chloride, benzyl dimethylamine, imidazole, 1-methylimidazole, 2-ethyl-4-methylimidazole, and 2-heptadecylimidazole.

Preferably, the catalyst is a combination of two or more of trimethylamine, pyridine, methyl sulfide, diethylene glycol dimethyl ether, triphenylphosphine, benzyltrimethylammonium chloride, benzyltriethylammonium chloride, benzyl dimethylamine, imidazole, 1-methylimidazole, 2-ethyl-4-methylimidazole, and 2-heptadecylimidazole.

More preferably, the catalyst is a combination of triphenylphosphine and benzyltrimethylammonium chloride.

More preferably, the mass ratio of the triphenylphosphine to the benzyltrimethylammonium chloride is 1:3.6 to 3.7.

Preferably, the crosslinking monomer is selected from one or more of styrene, vinyltoluene, methyl methacrylate, hydroxyethyl methacrylate, hydroxypropyl methacrylate, lauryl methacrylate, trimethylolpropane triacrylate, triallyl cyanurate, trimethylolpropane trimethacrylate, pentaerythritol triacrylate, and dipentaerythritol hexaacrylate.

More preferably, the crosslinking monomer is a combination of styrene and pentaerythritol triacrylate; the mass ratio of the styrene to the pentaerythritol triacrylate is 1.4-2:1.

Most preferably, the crosslinking monomer is a combination of styrene, trimethylolpropane triacrylate, and triallyl cyanurate; the mass ratio of the styrene, the trimethylolpropane triacrylate, and the triallyl cyanurate is 6-6.5:3-3.5:1.

The present invention specifically selects a combination of two or more crosslinking monomers. When styrene and pentaerythritol triacrylate are used as the crosslinking monomers, as compared to the use of a single crosslinking monomer, the higher crosslinking density can be achieved, and the glass-transition temperature of the vinyl ester resin is increased to above 200°C. Through research, the inventors have inventively found that when a ternary blend of styrene, trimethylolpropane triacrylate, and triallyl cyanurate is selected as the crosslinking monomer, the glass-transition temperature of the vinyl ester resin is further increased to above 230°C, far exceeding the level of the prior art. It is speculated by the inventors that this may be because styrene largely differs from pentaerythritol triacrylate in the molecular structure, resulting in strong intermolecular forces and slightly lower compatibility. Triallyl cyanurate has a similar polarity to styrene, and has a similar density to trimethylolpropane triacrylate, thereby improving the compatibility of the system, which further increases the crosslinking density to greatly enhance the high-temperature resistance of the vinyl ester resin. Meanwhile, triazinyl groups are introduced into the system via the triallyl cyanurate, which may enhance heat resistance and thermo-oxidative resistance.

Preferably, the coupling agent is selected from one or more of methyltrimethoxysilane, vinyltrichlorosilane, γ-(methacryloyloxy)propyltrimethoxysilane, maleic acid amide propyltriethoxysilane, and aminoethylaminopropyltrimethoxysilane.

In another aspect of the present invention, provided is a method for preparing the above-mentioned heat-resistant vinyl ester resin, including the following steps:
S1: mixing the phenolic epoxy resin, the multifunctional epoxy resin, and the polymerization inhibitor B in parts by weight, adding the unsaturated monocarboxylic acid, stirring well, then adding the catalyst, and heating up for reaction to obtain the vinyl ester resin prepolymer; and
S2: adding the polymerization inhibitor A, the crosslinking monomer, and the coupling agent to the vinyl ester resin prepolymer, and continuing stirring for reaction to obtain the heat-resistant vinyl ester resin.

Preferably, in step S1, the phenolic epoxy resin and the multifunctional epoxy resin are first heated and melted at 75-85°C, and then the polymerization inhibitor B is added and mixed evenly.

Preferably, in step S1, the heating up for reaction is performed at a temperature of 105-120°C.

Preferably, the heating rate during the heating up for reaction is 8-10°C/h, and the final temperature is controlled at 110-120°C.

Preferably, the specific steps for the heating up for reaction are: turning on the cooling water, controlling the heating rate at 8-10°C/h, and controlling the temperature at 110-120°C finally. When the temperature reaches 110°C, sampling is conducted every 0.5 h to test the epoxy value and acid value. The reaction ends when the epoxy value is less than or equal to 0.02 eq/100g and the acid value is less than or equal to 15 mgKOH/g, to obtain the vinyl ester resin prepolymer.

Preferably, in step S2, the vinyl ester resin prepolymer is first cooled to 75-85°C, and then the polymerization inhibitor A, the crosslinking monomer, and the coupling agent are added for reaction under stirring conditions for 0.5-1 h, to obtain the heat-resistant vinyl ester resin.

Compared with the prior art, the present invention has the following beneficial effects:
1. The heat-resistant vinyl ester resin of the present invention can withstand a high temperature of greater than 200°C, up to a maximum of 232.5°C, capable of meeting the use requirements of various fields and further expanding the application range of the heat-resistant vinyl ester resin.
2. The heat-resistant vinyl ester resin of the present invention still retains good mechanical properties and possesses the inherent corrosion resistance of the vinyl ester resin, thus offering higher application value.
3. The heat-resistant vinyl ester resin of the present invention has a moderate viscosity. The viscosity is within 500-700 mPa·s at 25°C, making it suitable for various molding processes of composite materials such as hand lay-up, vacuum infusion, RTM, and pultrusion, thereby enhancing convenience and universality of use.
4. The heat-resistant vinyl ester resin of the present invention exhibits good wetting and adhesion to carbon fibers and glass fibers, which can effectively improve the stability in use and extend the service life of the material.
5. The preparation process of the heat-resistant vinyl ester resin employed in the present invention is low-cost, simple and convenient, capable of being suitable for large-scale production, and is of extremely high industrialization value.

### BRIEF DESCRIPTION OF THE DRAWINGS

FIG. 1 shows a differential scanning calorimetry (DSC) curve of the heat-resistant vinyl ester resin in Example 1;
FIG. 2 shows a DSC curve of the heat-resistant vinyl ester resin in Example 2;
FIG. 3 shows a DSC curve of the heat-resistant vinyl ester resin in Example 3;
FIG. 4 shows a DSC curve of the heat-resistant vinyl ester resin in Example 4;
FIG. 5 shows a DSC curve of the heat-resistant vinyl ester resin in Comparative Example 1;
FIG. 6 shows a DSC curve of the heat-resistant vinyl ester resin in Comparative Example 2;
FIG. 7 shows a heat deflection temperature (HDT) curve of the heat-resistant vinyl ester resin in Example 1;
FIG. 8 shows an HDT curve of the heat-resistant vinyl ester resin in Example 2;
FIG. 9 shows an HDT curve of the heat-resistant vinyl ester resin in Example 3;
FIG. 10 shows an HDT curve of the heat-resistant vinyl ester resin in Example 4;
FIG. 11 shows an HDT curve of the heat-resistant vinyl ester resin in Comparative Example 1; and
FIG. 12 shows an HDT curve of the heat-resistant vinyl ester resin in Comparative Example 2.

### DESCRIPTION OF THE EMBODIMENTS

Unless otherwise specified, all reagents used in the embodiments of the present invention are commercially available conventional sources.

### Example 1

This example provides a heat-resistant vinyl ester resin. Raw materials are a vinyl ester resin prepolymer, crosslinking monomers styrene and pentaerythritol triacrylate, a coupling agent γ-(methacryloyloxy)propyltrimethoxysilane, and polymerization inhibitors tert-butylpyrocatechol and hydroquinone.

The raw materials for the vinyl ester resin prepolymer are: a phenol-phenolic epoxy resin, a multifunctional epoxy resin AG-70, methacrylic acid, catalysts triphenylphosphine and benzyltrimethylammonium chloride, and a polymerization inhibitor p-hydroxyanisole.

The amounts of raw materials and the preparation method are as follows:
S1: 275.2 kg of phenol-phenolic epoxy resin SQPN-048 (purchased from Shandong Shengquan New Materials Co., Ltd.), 51.9 kg of multifunctional epoxy resin AG-70 (purchased from Shanghai Huayi Resin Co., Ltd.) were put into a reaction kettle, heated up to 80°C to be heated and melted, then 0.2 kg of p-hydroxyanisole (CAS No.: 150-76-5) were added, maintained at 80±2°C, and stirred for 0.5 h. 162.9 kg of methacrylic acid (CAS No.: 79-41-4) were added and mixed evenly, and followed by the addition of 1.14 kg of triphenylphosphine (CAS No.: 603-35-0) and 4.17 kg of benzyltrimethylammonium chloride (CAS No.: 56-93-9). Cooling water was turned on, and the heating rate of the reaction kettle was controlled to 9±1°C/h. The final temperature of the reaction kettle reached 115±2°C. When the temperature reached 110°C, the epoxy value and the acid value were tested every 0.5 h. When the epoxy value decreased to below 0.02 eq/100g and the acid value decreased to below 15 mg KOH/g, the reaction was ended to yield the vinyl ester resin prepolymer.
S2: The vinyl ester resin prepolymer was cooled to 80°C, then 0.265 kg of tert-butylpyrocatechol (CAS No.: 27213-78-1), 0.045 kg of hydroquinone (CAS No.: 123-31-9), 293.0 kg of styrene (CAS No.: 100-42-5), 201.3 kg of pentaerythritol triacrylate (CAS No.: 3524-68-3), and 5.1 kg of γ-(methacryloyloxy)propyltrimethoxysilane KH570 (purchased from Jiang Xi Chenguang New Materials Company Limited) were added and stirred for 1.0 h to obtain the heat-resistant vinyl ester resin.

### Example 2

This example provides a heat-resistant vinyl ester resin. Raw materials are a vinyl ester resin prepolymer, crosslinking monomers styrene and pentaerythritol triacrylate, a coupling agent γ-(methacryloyloxy)propyltrimethoxysilane, and polymerization inhibitors tert-butylpyrocatechol and hydroquinone.

The raw materials for the vinyl ester resin prepolymer are: a phenol-phenolic epoxy resin, a multifunctional epoxy resin AG-80, methacrylic acid, catalysts triphenylphosphine and benzyltrimethylammonium chloride, and a polymerization inhibitor p-hydroxyanisole.

The amounts of raw materials and the preparation method are as follows:
S1: 279.7 kg of phenol-phenolic epoxy resin SQPN-048 (purchased from Shandong Shengquan New Materials Co., Ltd.), 45.8 kg of multifunctional epoxy resin AG-80 (purchased from Shanghai Huayi Resin Co., Ltd.) were put into a reaction kettle, heated up to 80°C to be heated and melted, then 0.23 kg of p-hydroxyanisole were then added, maintained at 80±2°C, and stirred for 0.5 h. 165.4 kg of methacrylic acid were added and mixed evenly, and followed by the addition of 1.15 kg of triphenylphosphine and 4.23 kg of benzyltrimethylammonium chloride. Cooling water was turned on, and the heating rate of the reaction kettle was controlled to 9±1°C/h. The final temperature of the reaction kettle reached 115±2°C. When the temperature reached 110°C, the epoxy value and the acid value were tested every 0.5 h. When the epoxy value decreased to below 0.02 eq/100g and the acid value decreased to below 15 mg KOH/g, the reaction was ended to yield the vinyl ester resin prepolymer.
S2: The vinyl ester resin prepolymer was cooled to 80°C, then 0.27 kg of tert-butylpyrocatechol, 0.046 kg of hydroquinone, 386.7 kg of styrene, 204.4 kg of pentaerythritol triacrylate, and 6.7 kg of γ-(methacryloyloxy)propyltrimethoxysilane KH570 (purchased from Jiang Xi Chenguang New Materials Company Limited) were added and stirred for 1.0 h to obtain the heat-resistant vinyl ester resin.

### Example 3

This example provides a heat-resistant vinyl ester resin. The raw materials are a vinyl ester resin prepolymer, crosslinking monomers styrene, trimethylolpropane triacrylate, and triallyl cyanurate, a coupling agent γ-(methacryloyloxy)propyltrimethoxysilane, polymerization inhibitors tert-butylpyrocatechol and hydroquinone.

The raw materials for the vinyl ester resin prepolymer are: a bisphenol-A phenolic epoxy resin SQAN-203, a multifunctional epoxy resin AG-70, methacrylic acid, catalysts triphenylphosphine and benzyltrimethylammonium chloride, and a polymerization inhibitor p-hydroxyanisole.

The amounts of raw materials and the preparation method are as follows:
S1: 297 kg of bisphenol-A phenolic epoxy resin SQAN-203 (purchased from Shandong Shengquan New Materials Co., Ltd.), 45.8 kg of multifunctional epoxy resin AG-70 (purchased from Shanghai Huayi Resin Co., Ltd.) were put into a reaction kettle, heated up to 80°C to be heated and melted, then 0.22 kg of p-hydroxyanisole were then added, maintained at 80±2°C, and stirred for 0.5 h. 160.4 kg of methacrylic acid were added and mixed evenly, and followed by the addition of 1.12 kg of triphenylphosphine and 4.10 kg of benzyltrimethylammonium chloride. Cooling water was turned on, and the heating rate of the reaction kettle was controlled to 9±1°C/h. The final temperature of the reaction kettle reached 115±2°C. When the temperature reached 110°C, the epoxy value and the acid value were tested every 0.5 h. When the epoxy value decreased to below 0.02 eq/100g and the acid value decreased to below 15 mg KOH/g, the reaction was ended to yield the vinyl ester resin prepolymer.
S2: The vinyl ester resin prepolymer was cooled to 80°C, then 0.26 kg of tert-butylpyrocatechol, 0.045 kg of hydroquinone, 288.6 kg of styrene, 150.9 kg of trimethylolpropane triacrylate, 47.4 kg of triallyl cyanurate, and 5.0 kg of γ-(methacryloyloxy)propyltrimethoxysilane KH570 (purchased from Jiang Xi Chenguang New Materials Company Limited) were added and stirred for 1.0 h to obtain the heat-resistant vinyl ester resin.

### Example 4

This example provides a heat-resistant vinyl ester resin. The raw materials are a vinyl ester resin prepolymer, crosslinking monomers styrene, trimethylolpropane triacrylate, and triallyl cyanurate, a coupling agent γ-(methacryloyloxy)propyltrimethoxysilane, polymerization inhibitors tert-butylpyrocatechol and hydroquinone.

The raw materials for the vinyl ester resin prepolymer are: a bisphenol-A phenolic epoxy resin SQAN-203, a multifunctional epoxy resin AG-80, methacrylic acid, catalysts triphenylphosphine and benzyltrimethylammonium chloride, and a polymerization inhibitor p-hydroxyanisole.

The amounts of raw materials and the preparation method are as follows:
S1: 299.2 kg of bisphenol-A phenolic epoxy resin SQAN-203 (purchased from Shandong Shengquan New Materials Co., Ltd.), 44.7 kg of multifunctional epoxy resin AG-80 (purchased from Shanghai Huayi Resin Co., Ltd.) were put into a reaction kettle, heated up to 80°C to be heated and melted, then 0.22 kg of p-hydroxyanisole were then added, maintained at 80±2°C, and stirred for 0.5 h. 161.7 kg of methacrylic acid were added and mixed evenly, and followed by the addition of 1.13 kg of triphenylphosphine and 4.14 kg of benzyltrimethylammonium chloride. Cooling water was turned on, and the heating rate of the reaction kettle was controlled to 9±1°C/h. The final temperature of the reaction kettle reached 115±2°C. When the temperature reached 110°C, the epoxy value and the acid value were tested every 0.5 h. When the epoxy value decreased to below 0.02 eq/100g and the acid value decreased to below 15 mg KOH/g, the reaction was ended to yield the vinyl ester resin prepolymer.
S2: The vinyl ester resin prepolymer was cooled to 80°C, then 0.26 kg of tert-butylpyrocatechol, 0.045 kg of hydroquinone, 288.6 kg of styrene, 150.9 kg of trimethylolpropane triacrylate, 47.4 kg of triallyl cyanurate, and 5.0 kg of γ-(methacryloyloxy)propyltrimethoxysilane KH570 (purchased from Jiang Xi Chenguang New Materials Company Limited) were added and stirred for 1.0 h to obtain the heat-resistant vinyl ester resin.

### Comparative Example 1

This example provides a heat-resistant vinyl ester resin. The raw materials are a vinyl ester resin prepolymer, crosslinking monomers styrene, trimethylolpropane triacrylate, and triallyl cyanurate, a coupling agent γ-(methacryloyloxy)propyltrimethoxysilane, polymerization inhibitors tert-butylpyrocatechol and hydroquinone.

The raw materials for the vinyl ester resin prepolymer are: epoxy resin NPEL-128, methacrylic acid, a catalyst benzyltrimethylammonium chloride.

The amounts of raw materials and the preparation method are as follows:
S1: 361.5 kg of epoxy resin NPEL-128 were put into a reaction kettle, heated up to 80°C to be heated and melted, then 158.5 kg of methacrylic acid were then added, maintained at 80±2°C, and stirred for 0.5 h, and 0.92 kg of benzyltrimethylammonium chloride were added. Cooling water was turned on, and the heating rate of the reaction kettle was controlled to 9±1°C/h. The final temperature of the reaction kettle reached 115±2°C. When the temperature reached 100°C, the epoxy value and the acid value were tested every 0.5 h. When the epoxy value decreased to below 0.02 eq/100g and the acid value decreased to below 15 mg KOH/g, the reaction was ended to yield the vinyl ester resin prepolymer.
S2: The vinyl ester resin prepolymer was cooled to 80°C, then 0.32 kg of tert-butylpyrocatechol, 0.06 kg of hydroquinone, 281.1 kg of styrene, 145.6 kg of trimethylolpropane triacrylate, 46.1 kg of triallyl cyanurate, and 5.8 kg of γ-(methacryloyloxy)propyltrimethoxysilane KH570 were added and stirred for 1.0 h to obtain the heat-resistant vinyl ester resin.

### Comparative Example 2

This example provides a heat-resistant vinyl ester resin. The raw materials are a vinyl ester resin prepolymer, crosslinking monomers styrene, trimethylolpropane triacrylate, and triallyl cyanurate, a coupling agent γ-(methacryloyloxy)propyltrimethoxysilane, polymerization inhibitors tert-butylpyrocatechol and hydroquinone.

The raw materials for the vinyl ester resin prepolymer are: phenolic epoxy resin NPPN-638S, methacrylic acid, and a catalyst benzyltrimethylammonium chloride.

The amounts of raw materials and the preparation method are as follows:
S1: 344.3 kg of phenolic epoxy resin NPPN-63 8 S were put into a reaction kettle, heated up to 80°C to be heated and melted, then 162.9 kg of methacrylic acid were then added, maintained at 80±2°C, and stirred for 0.5 h, and 3.95 kg of benzyltrimethylammonium chloride were added. Cooling water was turned on, and the heating rate of the reaction kettle was controlled to 9±1°C/h. The final temperature of the reaction kettle reached 115±2°C. When the temperature reached 100°C, the epoxy value and the acid value were tested every 0.5 h. When the epoxy value decreased to below 0.02 eq/100g and the acid value decreased to below 15 mg KOH/g, the reaction was ended to yield the vinyl ester resin prepolymer.
S2: The vinyl ester resin prepolymer was cooled to 80°C, then 0.33 kg of tert-butylpyrocatechol, 0.06 kg of hydroquinone, 288.8 kg of styrene, 149.6 kg of trimethylolpropane triacrylate, 47.3 kg of triallyl cyanurate, and 6.0 kg of γ-(methacryloyloxy)propyltrimethoxysilane KH570 were added and stirred for 1.0 h to obtain the heat-resistant vinyl ester resin.

### Performance Testing

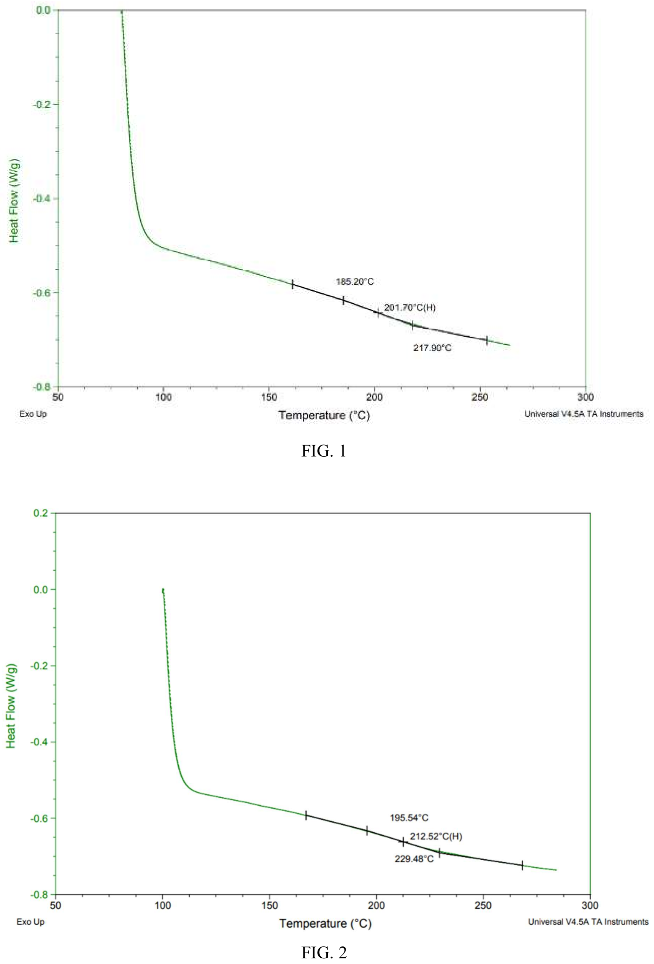

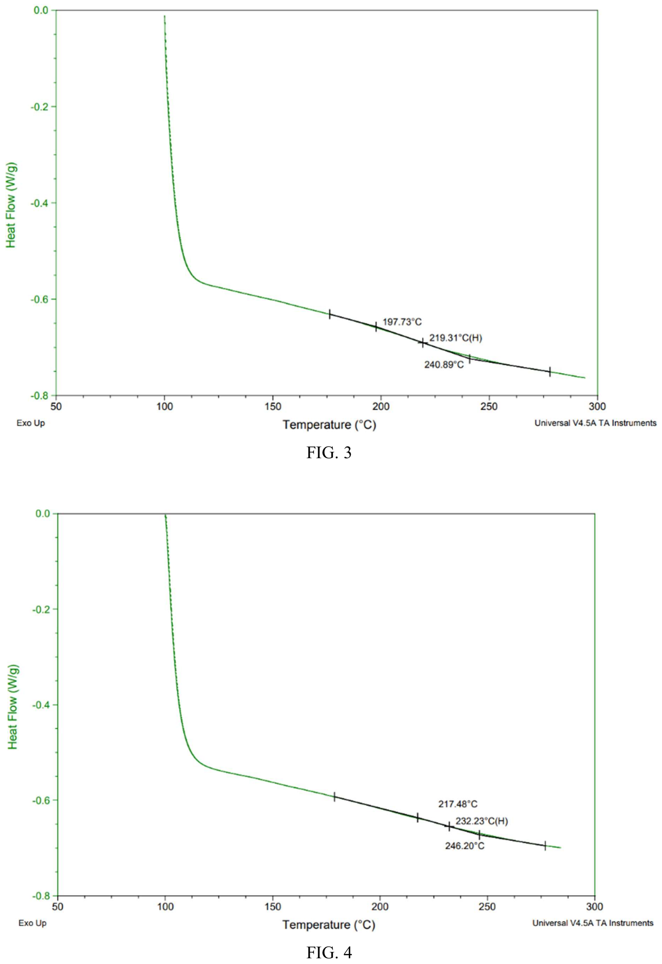

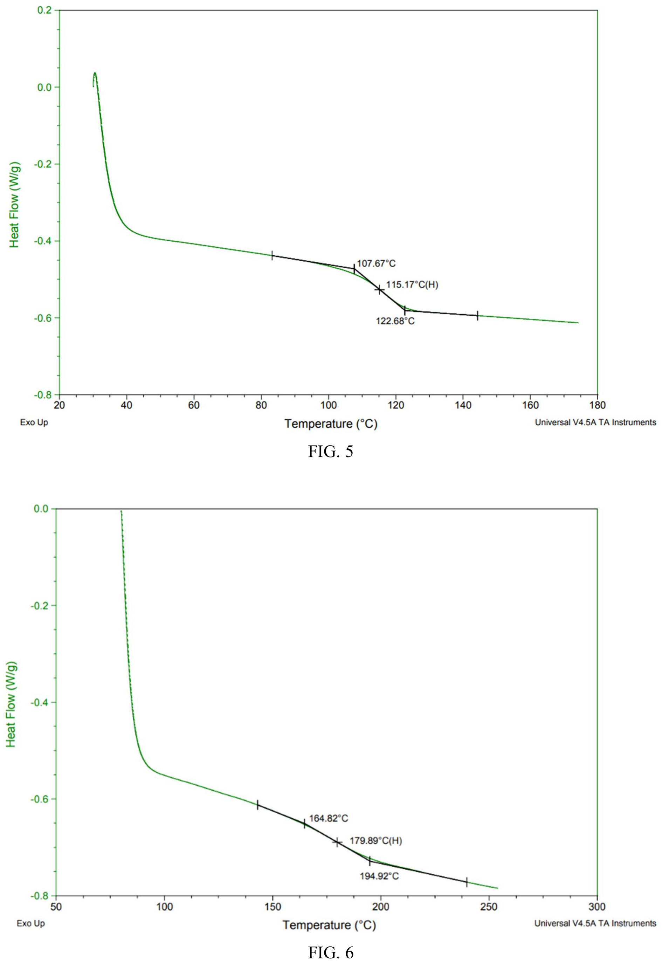

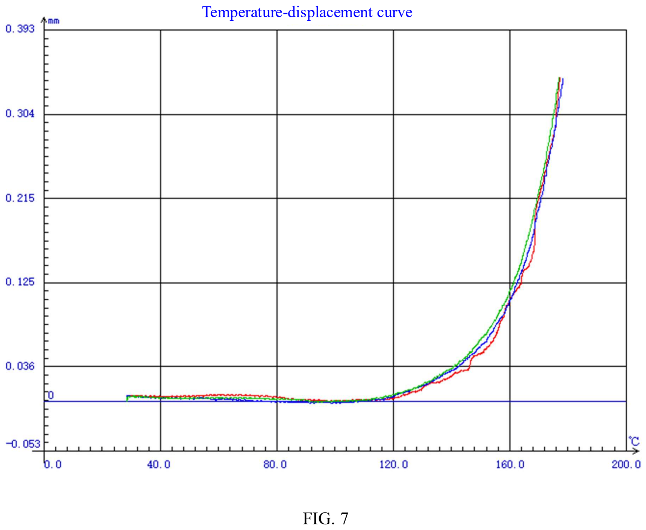

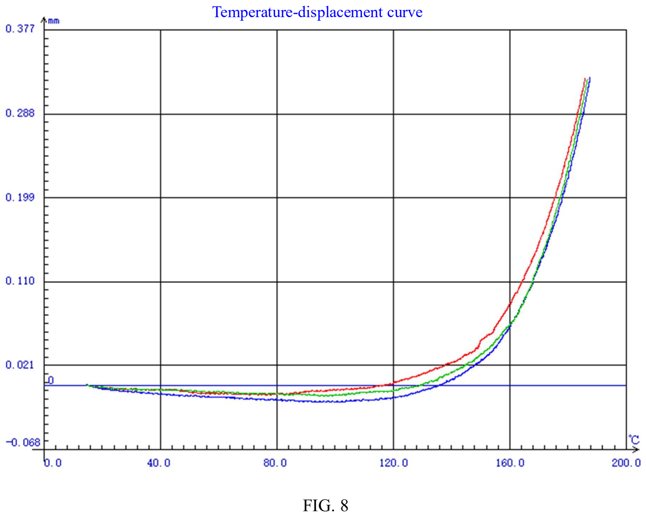

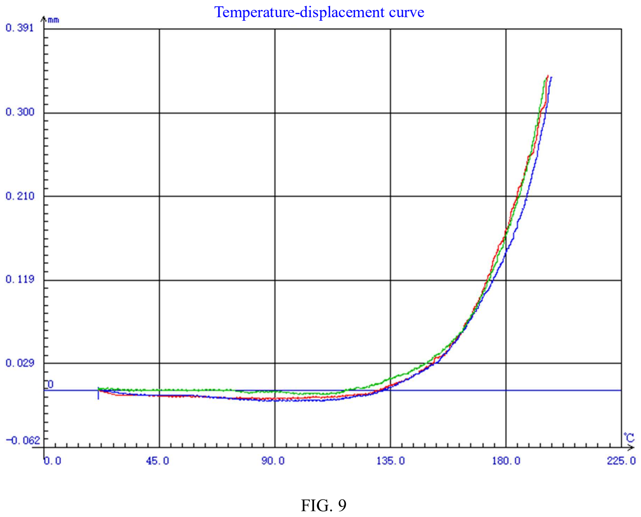

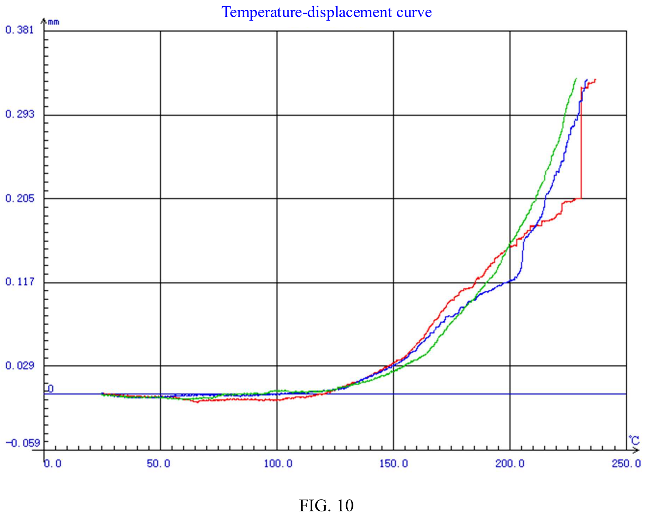

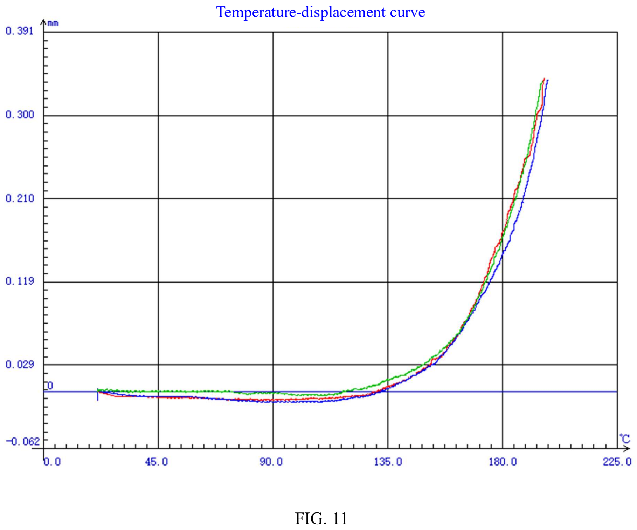

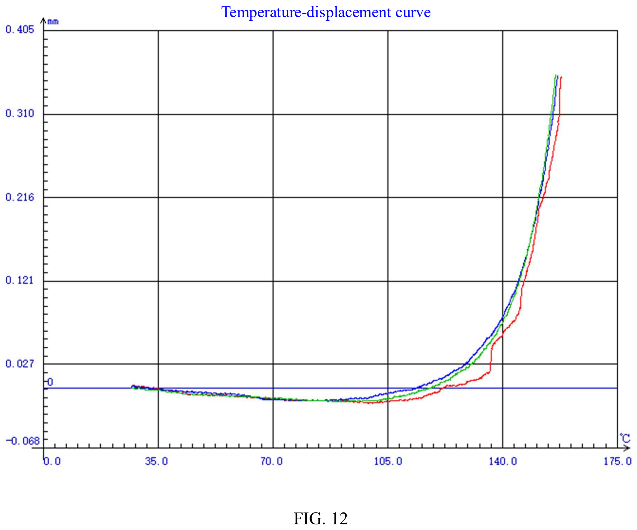

1. Mechanical properties and heat resistance of the heat-resistant vinyl ester resins from Examples 1-4 and Comparative Examples 1-2 were tested. The test methods and results are shown in Table 1. Six parallel samples of the heat-resistant vinyl ester resin were prepared for each example and comparative example, tested and averaged. The DSC curves and HDT curves of the heat-resistant vinyl ester resins from Examples 1-4 and Comparative Examples 1-2 are shown in FIGS. 1-12, respectively.

**Table 1**

| Test items | Test methods | Example 1 | Example 2 | Example 3 | Example 4 | Comparative Example 1 | Comparative Example 2 |
|---|---|---|---|---|---|---|---|
| Tensile | GB/T | 73.7 ± 8.2 | 68.5 ± 5.6 | 66.6 ± | 66.0 ± | 77 ± 5.4 | 68.1 ± |
| strength, MPa | 2567-2008 | | | 8.0 | 10.7 | | 6.3 |
| Tensile modulus, GPa | GB/T 2567-2008 | 3.6 ± 0.2 | 3.65 ± 0.3 | 3.79 ± 0.3 | 3.7 ± 0.5 | 3.3 ± 0.35 | 3.6 ± 0.37 |
| Elongation at break, % | GB/T 2567-2008 | 2.1 ± 0.25 | 1.8 ± 0.23 | 2.1 ± 0.21 | 1.99 ± 0.37 | 4.4 ± 0.39 | 2.2 ± 0.1 |
| Flexural strength, MPa | GB/T 2567-2008 | 125 ± 16.5 | 120 ± 12.1 | 123 ± 8.6 | 118 ± 8 | 128 ± 9.2 | 126 ± 11.1 |
| Flexural modulus, GPa | GB/T 2567-2008 | 3.7 ± 0.15 | 3.75 ± 0.42 | 3.9 ± 0.39 | 3.9 ± 0.12 | 3.4 ± 0.22 | 3.8 ± 0.31 |
| Impact strength, KJ/m² | GB/T 1043.1-2008 | 13.1 ± 2.0 | 10.3 ± 2.4 | 9.8 ± 2.1 | 10.0 ± 3.6 | 18 ± 2.7 | 15 ± 3.2 |
| HDT, °C | GB/T 1634-2019 | 177.6 | 186.9 | 196.9 | 228.5 | 98.7 | 157 |
| Tg, °C | GB/T 19466.2-2004 | 201.7 | 212.5 | 219.3 | 232.5 | 115.2 | 179.9 |

2. Corrosion resistance testing

Corrosion resistance testing was conducted with reference to the industry standard HG/T 5876-2021: the heat-resistant vinyl ester resins from Examples 1-4 and Comparative Examples 1-2 were cured into pure resin casting bodies, respectively. Flexural specimens and 50*50 mm sample pieces were prepared in accordance with GB/T 2567-2008. These were soaked separately into corrosive media including distilled water, toluene, 30% hydrochloric acid, and 50% sulfuric acid to evaluate their corrosion resistance. The evaluation method includes periodic removal for visual inspection and testing of weight change rate, flexural strength and modulus, and Barcol hardness change rate. The results of the toluene soaking experiment at 25°C are shown in Table 2; the results of the distilled water soaking experiment at 100°C are shown in Table 3; the results of the 30% hydrochloric acid soaking experiment at 40°C are shown in Table 4, and the results of the 50% sulfuric acid soaking experiment at 60°C are shown in Table 5.

**Table 2**

| Test item | Time | Example 1 | Example 2 | Example 3 | Example 4 | Comparative Example 1 | Comparative Example 2 |
|---|---|---|---|---|---|---|---|
| Mass change rate | 0 d | 0 | 0 | 0 | 0 | 0 | 0 |
| | 15 d | 0.05% | 0.03% | 0.06% | 0.06% | 0.01% | 0.02% |
| | 30 d | 0.08% | 0.07% | 0.09% | 0.1% | 0.04% | 0.05% |
| Barcol hardness retention rate | 0 d | 100% | 100% | 100% | 100% | 100% | 100% |
| | 15 d | 106.0% | 103.8% | 105.7% | 105.26% | 102.56% | 105.66% |
| | 30 d | 108.3% | 107.5% | 107.3% | 105.3% | 103.3% | 107.5% |
| Flexural strength retention rate | 0 d | 100% | 100% | 100% | 100% | 100% | 100% |
| | 15 d | 101.7% | 102.4% | 104.7% | 120.7% | 98.7% | 105.7% |
| | 30 d | 97.3% | 96.1% | 102.4% | 96.3% | 96.0% | 96.8% |
| Flexural modulus retention rate | 0 d | 100% | 100% | 100% | 100% | 100% | 100% |
| | 15 d | 101.1% | 100.2% | 100.9% | 101.7% | 99.7% | 101.9% |
| | 30 d | 100.5% | 100.4% | 100.8% | 101.0% | 99.5% | 100.4% |

According to the evaluation criteria of the industry standard HG/T 5876-2021, the heat-resistant vinyl ester resins from Examples 1-4 and Comparative Examples 1-2 may be resistant to toluene solvent at room temperature (25°C) for 30 days. That is, the heat-resistant vinyl ester resins from Examples 1-4 still maintain good toluene resistance.

**Table 3**

| Test item | Time | Example 1 | Example 2 | Example 3 | Example 4 | Comparative Example 1 | Comparative Example 2 |
|---|---|---|---|---|---|---|---|
| Mass change rate | 0 d | 0 | 0 | 0 | 0 | 0 | 0 |
| | 50 h | 1.78% | 1.77% | 1.80% | 1.90% | 1.16% | 1.71% |
| | 100 h | 1.85% | 1.94% | 1.88% | 1.97% | 1.24% | 1.91% |
| | 15 d | 1.62% | 1.68% | 1.72% | 1.84% | 1.08% | 1.95% |
| | 30 d | 1.58% | 1.62% | 1.60% | 1.80% | 1.02% | 1.88% |
| Barcol hardness retention rate | 0 d | 100% | 100% | 100% | 100% | 100% | 100% |
| | 50 h | 95.8% | 96.0% | 92.5% | 97.7% | 89.7% | 95.5% |
| | 100 h | 95.8% | 96.0% | 94.5% | 96.5% | 88.7% | 94.3% |
| | 15 d | 93.8% | 92.7% | 94.7% | 94.7% | 88.7% | 94.3% |
| | 30 d | 98.9% | 98.6% | 97.6% | 97.8% | 88.7% | 95.3% |
| Flexural strength retention rate | 0 d | 100% | 100% | 100% | 100% | 100% | 100% |
| | 50 h | 89.8% | 92.8% | 90.6% | 94.8% | 72.8% | 74.9% |
| | 100 h | 84.0% | 83.1% | 85.6% | 90.3% | 73.1% | 78.0% |
| | 15 d | 81.6% | 83.0% | 83.4% | 87.3% | 73.2% | 76.0% |
| | 30 d | 80.0% | 81.2% | 82.4% | 87.3% | 70.5% | 73.0% |
| Flexural modulus retention rate | 0 d | 100% | 100% | 100% | 100% | 100% | 100% |
| | 50 h | 96.6% | 94.9% | 95.1% | 96.5% | 92.9% | 94.5% |
| | 100 h | 94.7% | 95.0% | 95.4% | 97.0% | 91.8% | 96.8% |
| | 15 d | 95.1% | 94.7% | 95.8% | 97.2% | 92.7% | 91.9% |
| | 30 d | 94.5% | 94.2% | 95.0% | 96.9% | 90.9% | 96.0% |

According to the evaluation criteria of the industry standard HG/T 5876-2021, the heat-resistant vinyl ester resins from Examples 1-4 may be resistant to distilled water soaking at 100°C for 30 days, while the heat-resistant vinyl ester resins from Comparative Examples 1-2 are moderately resistant.

**Table 4**

| Test item | Time | Example 1 | Example 2 | Example 3 | Example 4 | Comparative Example 1 | Comparative Example 2 |
|---|---|---|---|---|---|---|---|
| Mass change rate | 0d | 0 | 0 | 0 | 0 | 0 | 0 |
| | 15d | 0.32% | 0.45% | 0.47% | 0.53% | 0.22% | 0.36% |
| | 30d | 0.42% | 0.54% | 0.61% | 0.71% | 0.31% | 0.51% |
| Barcol hardness retention rate | 0d | 100% | 100% | 100% | 100% | 100% | 100% |
| | 15d | 106.8% | 106.0% | 105.7% | 103.5% | 108.3% | 110.3% |
| | 30d | 103.6% | 108.0% | 103.8% | 101.8% | 106.3% | 101.9% |
| Flexural strength retention rate | 0d | 100% | 100% | 100% | 100% | 100% | 100% |
| | 15d | 97.6% | 95.8% | 94.7% | 99.7% | 103.6% | 105.3% |
| | 30d | 94.5% | 91.3% | 95.3% | 98.0% | 97.6% | 89.7% |
| Flexural modulus retention rate | 0d | 100% | 100% | 100% | 100% | 100% | 100% |
| | 15d | 102.2% | 102.9% | 103.6% | 104.9% | 102.8% | 105.2% |
| | 30d | 98.3% | 102.2% | 102.8% | 102.4% | 101.0% | 103.4% |

According to the evaluation criteria of the industry standard HG/T 5876-2021, the heat-resistant vinyl ester resins from Examples 1-4 and Comparative Examples 1-2 may be resistant to 30% hydrochloric acid soaking at 40°C for 30 days.

**Table 5**

| Test item | Time | Example 1 | Example 2 | Example 3 | Example 4 | Comparative Example 1 | Comparative Example 2 |
|---|---|---|---|---|---|---|---|
| Mass change rate | 0d | 0 | 0 | 0 | 0 | 0 | 0 |
| | 15d | 0.31% | 0.30% | 0.33% | 0.32% | 0.19% | 0.27% |
| | 30d | 0.27% | 0.28% | 0.30% | 0.28% | 0.16% | 0.25% |
| Barcol hardness retention rate | 0d | 100% | 100% | 100% | 100% | 100% | 100% |
| | 15d | 108.0% | 106.3% | 103.3% | 105.3% | 102.1% | 103.8% |
| | 30d | 108.0% | 108.3% | 107.0% | 105.3% | 103.0% | 105.7% |
| Flexural strength retention rate | 0d | 100% | 100% | 100% | 100% | 100% | 100% |
| | 15d | 88.7% | 98.7% | 92.5% | 111.7% | 97.5% | 103.8% |
| | 30d | 85.3% | 90.0% | 91.4% | 101.4% | 81.5% | 84.5% |
| Flexural modulus retention rate | 0d | 100% | 100% | 100% | 100% | 100% | 100% |
| | 15d | 100.9% | 101.2% | 100.3% | 101.2% | 100.5% | 103.6% |
| | 30d | 99.0% | 98.8% | 101.0% | 99.6% | 95.8% | 100.6% |

According to the evaluation criteria of the industry standard HG/T 5876-2021, the heat-resistant vinyl ester resins from Examples 1-4 may be resistant to 50% sulfuric acid soaking at 60°C for 30 days, while the heat-resistant vinyl ester resins from Comparative Examples 1-2 are moderately resistant.

## Claims

1. A heat-resistant vinyl ester resin, comprising a vinyl ester resin prepolymer, a crosslinking monomer, a coupling agent, and a polymerization inhibitor A as raw materials;
wherein raw materials of the vinyl ester resin prepolymer comprise: a phenolic epoxy resin, a multifunctional epoxy resin, an unsaturated monocarboxylic acid, a catalyst, and a polymerization inhibitor B.

2. The heat-resistant vinyl ester resin according to claim 1, **characterized in that** the raw materials comprise, in parts by weight, 45-55 parts of the vinyl ester resin prepolymer, 45-60 parts of the crosslinking monomer, 0.3-1 part of the coupling agent, and 0.02-0.05 parts of the polymerization inhibitor A; and
the vinyl ester resin prepolymer comprises, in parts by weight, 25-40 parts of the phenolic epoxy resin, 4-8 parts of the multifunctional epoxy resin, 0.015-0.03 parts of the polymerization inhibitor B, 15-20 parts of the unsaturated monocarboxylic acid, and 0.5-1 part of the catalyst.

3. The heat-resistant vinyl ester resin according to claim 1 or 2, **characterized in that** the phenolic epoxy resin has an epoxy value of 0.45-0.6 eq/100 g.

4. The heat-resistant vinyl ester resin according to claim 3, **characterized in that** the phenolic epoxy resin is selected from one or more of a multifunctional o-cresol formaldehyde epoxy resin, a bisphenol-A phenolic epoxy resin, and a phenol-phenolic epoxy resin.

5. The heat-resistant vinyl ester resin according to claim 1 or 2, **characterized in that** the multifunctional epoxy resin is selected from one or more of AG-70, AG-80, and AFG-90.

6. The heat-resistant vinyl ester resin according to claim 1 or 2, **characterized in that** the crosslinking monomer is selected from one or more of styrene, vinyltoluene, methyl methacrylate, hydroxyethyl methacrylate, hydroxypropyl methacrylate, lauryl methacrylate, trimethylolpropane triacrylate, triallyl cyanurate, trimethylolpropane trimethacrylate, pentaerythritol triacrylate, and dipentaerythritol hexaacrylate.

7. The heat-resistant vinyl ester resin according to claim 1 or 2, **characterized in that** the polymerization inhibitor A and the polymerization inhibitor B are independently selected from one or more of tert-butylhydroquinone, p-hydroxyanisole, tert-butylpyrocatechol, p-benzoquinone, hydroquinone, and methylhydroquinone.

8. The heat-resistant vinyl ester resin according to claim 1 or 2, **characterized in that** the catalyst comprises one or more of trimethylamine, pyridine, methyl sulfide, diethylene glycol dimethyl ether, triphenylphosphine, benzyltrimethylammonium chloride, benzyltriethylammonium chloride, benzyl dimethylamine, imidazole, 1-methylimidazole, 2-ethyl-4-methylimidazole, and 2-heptadecylimidazole.

9. A method for preparing the heat-resistant vinyl ester resin according to any one of claims 1-8, comprising the following steps:
S1: mixing the phenolic epoxy resin, the multifunctional epoxy resin, and the polymerization inhibitor B in parts by weight, adding the unsaturated monocarboxylic acid, stirring well, then adding the catalyst, and heating up for reaction to obtain the vinyl ester resin prepolymer; and
S2: adding the polymerization inhibitor A, the crosslinking monomer, and the coupling agent to the vinyl ester resin prepolymer, and continuing stirring for reaction to obtain the heat-resistant vinyl ester resin.

10. The method for preparing the heat-resistant vinyl ester resin according to claim 9, **characterized in that** in step S1, the heating up for reaction is performed at a temperature of 105-120°C.
